# EUROPÄISCHE PATENTSCHRIFT

(11) **EP 1 892 451 B1**
(45) Veröffentlichungstag und Bekanntmachung des Hinweises auf die Patenterteilung: **19.10.2011**
(21) Anmeldenummer: 07011892.2
(22) Anmeldetag: 18.06.2007
(51) Int. Cl.: F16L 55/165, F16L 55/44, F16L 55/163

(54) **Verfahren zur grabenlosen Reparatur von Schadstellen in Kanälen un Rohrleitungen**
Method for repairing defects in conduits and ducts without digging
Procédé destiné à la réparation sans tranchée de sites endommagés dans des canalisations et conduites

(30) Priorität: 17.08.2006 DE 102006038607
(43) Veröffentlichungstag der Anmeldung: 27.02.2008
(73) Patentinhaber: Abwasser-Service Volkner GmbH, 53721 Siegburg (DE)
(72) Erfinder: Lingnau, Thorsten, 53809 Ruppichteroth (DE)
(74) Vertreter: Kohlmann, Kai

(56) Entgegenhaltungen:
- DE-A1- 4 021 456
- DE-A1- 4 104 185
- DE-A1- 10 017 711
- US-A- 5 706 861

## Beschreibung

Die Erfindung betrifft ein Verfahren zur grabenlosen Reparatur von Schadstellen in Kanälen und Rohrleitungen mittels Linern, die mit einer zeitverzögert aushärtenden Chemikalie getränkt und in den Kanal oder die Rohrleitung eingebracht werden.

Dieses auch als Inlining-Verfahren bezeichnete Reparaturverfahren beseitigt schnell und ohne aufwändige Rüstarbeiten Undichtigkeiten, d. h. Ex- oder Infiltrationen z. B. bei Rohrbrüchen, bei der Nachbehandlung von beseitigtem Wurzeleinwuchs sowie bei Lageabweichungen sowie Riss- und Scherbenbildung. An der Schadstelle wird schlauchförmiges Material aus synthetischem Gewebe in dem Rohr zur Ausbildung eines Hilfsrohres eingebaut. Durch Tränkung mit zeitverzögert aushärtenden Chemikalien härtet das Gewebe nach Einbringung in das Rohr aus und bildet eine neue stabile Innenhaut in dem Rohr, das sogenannte Hilfsrohr.

Zur Durchführung der Reparatur wird nach dem Stand der Technik eine entsprechend der Länge der Schadstelle in Achsrichtung des Rohres zugeschnittene Glasfasermatte mit einem zeitverzögert härtenden Epoxydharz getränkt. Anschließend wird die Glasfasermatte auf einen Blähpacker aufgezogen, der der Rohrnennweite entsprechend dimensioniert ist. Der Blähpacker wird an die zu reparierende Schadstelle gebracht und dort mittels Druckluft aufgeweitet. Infolgedessen wird die mit Epoxydharz getränkte Glasfasermatte vollflächig und überlappend an die Innenwand des zu reparierenden Rohres der Rohrleitung gepresst. Hierdurch dringt das Epoxydharz, das infolge der Härtung eine zunehmend pastöse Konsistenz annimmt, in Risse des Rohres und zwischen Scherben ein und schafft nach dem Erhärten eine dauerhafte Verbindung mit dem zu reparierenden Rohr unter Ausbildung des Hilfsrohres. Nach Erhärten des Epoxydharzes, etwa nach 60 Minuten, kann der Blähpacker entspannt und aus der Rohrleitung entfernt werden.

An stark beanspruchten und gegeneinander beweglichen Übergängen der Rohre von Rohrleitungen bzw. der Kanalsegmente von Känalen ist die grabenlose Reparatur nach dem Stand der Technik problematisch, da das von dem Liner gebildete Hilfsrohr nach dem Aushärten an dem Übergang zwischen den beiden Rohren bzw. Kanalsegmenten in Folge der Beanspruchung wieder brechen und damit undicht werden kann.

Aus der DE 41 04 185 A1 ist ein Verfahren zum Sanieren eines im Erdreich verlegten Abwasserkanals bekannt, wobei die an der Schadstelle eingebrachte partielle Auskleidung die Strömung des durch den Abwasserkanal geführten Mediums nicht beeinträchtigt und vom strömenden Medium nicht unterwandert wird. Eine den beschädigten Bereich des Abwasserkanals innen abdeckende, mit aushärtbarem Kunstharz getränkte Glasfasermatte wird bei diesem Verfahren mehrlagig um einen Blähpacker gelegt, dessen Aussendurchmesser erheblich kleiner als der Innendurchmesser des zu sanierenden Abwasserkanals ist. Sodann presst der Blähpacker unter Druck die Glasfasermatte gesamtumfänglich an die zu sanierende Rohrwand, wobei die Reibung zwischen den harzgetränkten Mattenlagen durch den Innendruck des Blähpackers überwunden wird und eine Vergrößerung der mehrlagigen Glasfasermatte auf den Innendurchmesser des zu sanierenden Abwasserkanals erfolgt.

Der Anpressdruck des Blähpackers wird bis zur Aushärtung des Kunstharzes aufrechterhalten. Der Blähpacker wird üblicherweise unter Kamerabeobachtung mittels Seilwinde in den zu sanierenden Abwasserkanal eingezogen und positioniert. Dabei ist der Blähpacker mit einer Schlauchleitung für das Druckmedium gekoppelt. Der Packer selbst wird dann mittels Luft- oder Flüssigkeitsdruck aufgeweitet, bis sich die mehrlagig getränkte Faserschicht an die Innenwand des Kanals anpresst.

Die US 5,706,861 betrifft ebenfalls das Auskleiden von Kanälen mit in dem Kanal aushärtenden flexiblen Futterrohren. Die Futterrohre bestehen aus fasrigen Filzen, die mit einem aushärtbaren Kunstharz getränkt sind. Während das Futterrohr noch flexibel ist, wird es mit Flüssigkeits- oder Gasdruck gegen die Oberfläche des auszukleidenden Kanals gedrückt, so dass sich das Futterrohr der Oberflächenform des Kanals anpasst und dabei aushärtet. Das Aushärten kann aktiv, beispielsweise mittels Lichtstrahlung oder Ultraschall unterstützt werden oder unter Umgebungsbedingungen von selbst erfolgen, je nach dem was für Kunstharze zum Einsatz gelangen. Das Futterrohr kann entweder ein kontinuierlich ausgebildetes Rohr sein oder als flaches Band um den Blähpacker gewickelt werden, dessen Enden sich überlappen. Die Überlappung bietet den Vorteil, dass das Futterrohr dann nicht genau an den Innendurchmesser des zu sanierenden Kanals angepasst zu werden braucht, da es beim Aufblasen des Blähpackers die richtige Abmessung erhält. Da die zu sanierenden Kanäle häufig Kurven und Krümmungen aufweisen und die zur Reparatur vorgesehene Auskleidung der Blähpacker relativ empfindliche Teile sind, die, wenn sie z. B. an der Oberfläche eines Kanals entlanggezogen werden, reißen oder brechen können, ist das Kernrohr des Blähpackers einstückig ausgebildet und derart konstruiert, dass es eine ausreichende Steifigkeit aufweist, um dem Aufblasdruck zu widerstehen, jedoch zugleich ausreichend biegsam ist, um den noch nicht aufgeblasenen Blähpacker um Kurven und Ecken in dem zu sanierenden Kanal an die Sanierungsstelle beschädigungsfrei bringen zu können. Das einstückige Rohr des Blähpackers kann zu diesem Zweck aus einem starren gummiähnlichen Material mit ausreichender Dicke hergestellt sein.

Ausgehend von diesem und dem in dem Prospekt der Volkner GmbH, Fachbetrieb für Hausanschlüsse und Abwassertechnik, "Alle Leistungen rund um den Abwasserabfluss aus einer Hand!" WIEMAR WERBEAGENTUR 3/2006 veröffentlichten Stand der Technik liegt der Erfindung daher die Aufgabe zugrunde, ein Verfahren der eingangs erwähnten Art vorzuschlagen, mit dem sich Undichtigkeiten an Übergängen zwischen Rohren bzw. Kanalsegmenten dauerhaft abdichten lassen.

Die Lösung beruht auf dem Gedanken, mit Hilfe des bekannten Verfahrens zur grabenlosen Reparatur von Schadstellen in Kanälen und Rohrleitungen mittels Linern ein elastisches Element in den Bereich des schadhaften Überganges zwischen den Rohren bzw. Kanalsegmenten einzubringen. Das elastische Element folgt den Relativbewegungen der Stoßstellen der Rohre bzw. Kanalsegmente an dem Übergang.

Derartige stark beanspruchte Übergänge kommen in großem Umfang an den Kanälen auf Flughafengeländen, den sogenannten Schlitzrinnen, vor. Dabei handelt es sich um im wesentlichen rechteckige Kanalgeometrien mit einem an der Oberseite angeordneten Längsschlitz der mit der Oberfläche des Flughafengeländes, insbesondere der Start- und Landebahn abschließt.

Im Einzelnen erfolgt die Reparatur der Übergänge in Kanälen und Rohrleitungen wie folgt:
Zunächst werden auf den Blähpacker zwei mit einer zeitverzögert aushärtenden Chemikalie getränkte Liner im Abstand zueinander aufgezogen, wobei die Enden jedes Liners sich in Umfangsrichtung überlappen. Vor der Tränkung wird der Liner in Rechteckform in einer Größe zugeschnitten, das dessen Enden sich in Umfangsrichtung um mindestens 10 % der Umfangslänge überlappen, wenn der Liner auf den entspannten Blähpacker aufgezogen wird. Hierdurch wird sichergestellt, dass der Liner auch nach dem Aufweiten des Blähpackers vollflächig in Umfangsrichtung an der Innenwand der Rohrleitung oder des Kanals anliegt, um ein geschlossenes Hilfsrohr zu bilden. In Achsrichtung sollte die Länge des Liners so gewählt werden, dass eine sichere Verankerung des ausgehärteten Liners mit dem Rohrende bzw. Kanalsegment gewährleistet ist.

In einem nächsten Schritt wird über die beiden Liner mit Spiel eine elastische Manschette gezogen. Durch das Spiel wird eine Beschädigung der noch nicht ausgehärteten Liner sowie deren Verschiebung auf dem Blähpacker verhindert.

Die Länge der Manschette in Richtung der Längsachse des Blähpackers ist so zu wählen, dass sie die beiden Liner teilweise, etwa zu 50 % und die durch den Abstand zwischen den Linern definierte ringförmige freie Fläche des Blähpackers vollständig überlappt. Der Abstand zwischen den Linern auf dem Blähpacker ist auf den Abstand der Stoßstellen an dem Übergang zwischen den zu reparierenden Rohren bzw. Kanalsegmenten anzupassen.

Die in Position gebrachte elastische Manschette wird mit mindestens einem Halteelement an den Linern und der freien Fläche des Blähpackers zur Anlage gebracht. Als Halteelement kommt beispielsweise eine Plastikfolie in Betracht, die um die Manschette geschlungen wird. Die Plastikfolie wird bei der späteren Aufweitung des Blähpackers zerstört und erlaubt die ungehinderte Ausweitung der Liner und der elastischen Manschette.

Der derart vorbereitete Blähpacker wird in die Rohrleitung oder den Kanal eingebracht, bis sich der die freie Fläche des Blähpackers überlappende Teil der elastischen Manschette auf Höhe des schadhaften Überganges zwischen den Stoßstellen zweier Rohre oder zweier Kanalsegmente befindet.

Grundsätzlich kann bei Schlitzrinnen das Einbringen unter Sicht-Beobachtung erfolgen. Vorzugsweise wird der vorbereitete Blähpacker jedoch unter Kamerabeobachtung in die Rohrleitung oder den Kanal eingebracht. Das Einbringen des vorbereiteten Blähpackers erfolgt durch Einziehen oder Einschieben in die Rohrleitung. Zum Schieben werden auf die Stirnseiten des Blähpackers wirkende Zylinder und zum Ziehen an den Stirnseiten befestigte Zugmittel verwendet.

Sobald der Blähpacker an der Schadstelle korrekt positioniert ist, wird er aufgeweitet, bis die beiden Liner sowie die elastische Manschette an der Innenwand der Rohrleitung oder des Kanals anliegen. Dabei wird das Halteelement, insbesondere die Plastikfolie zerrissen.

Wie bei sämtlichen Inlining-Verfahren muss das Einbringen zügig nach Vorbereitung des Blähpackers erfolgen, um eine zu weitgehende Härtung der Liner vor korrekter Positionierung an der Schadstelle zu verhindern. Je nach verwendetem Kunstharz und Härter verbleibt der aufgeweitete Blähpacker dann zwischen 30 und 90 Minuten in der Rohrleitung bzw. in dem Kanal. Nach dem Erhärten, insbesondere nach vollständiger Aushärtung der des Kunstharzes wird der Blähpacker entspannt und aus der Rohrleitung oder dem Kanal entfernt. Infolge der Härtung verbinden sich die zu beiden Seiten der Manschette überstehenden Teile der Liner mit den Enden der Rohre bzw. Kanalsegmente. Wird nun der Blähpacker entspannt, verbleiben die Liner sowie die elastische Manschette in der Rohrleitung oder dem Kanal, während der entspannte, im Durchmesser reduzierte Blähpacker entfernt werden kann.

Um ein Verkleben des Blähpackers mit den Linern in jedem Fall sicher zu verhindern, ist es in einer Ausgestaltung des Verfahrens vorgesehen, dass der Blähpacker vor dem Aufziehen der Liner mit einem Trennmittel vorbehandelt wird und/oder mit einer Trennfolie umhüllt wird, die sich über die Länge der beiden Liner in Richtung der Längsachse des Blähpackers und über die Länge der ringförmigen freien Fläche des Blähpackers erstreckt.

Für die beiden Liner wird ein flexibles Trägermaterial verwendet, das für die zeitverzögert aushärtende Chemikalie, insbesondere das Kunstharz, gut aufnahmefähig ist. Bei dem Trägermaterial handelt es sich insbesondere um eine Glasfasermatte mit hohem E-Modul. Das Glasfasergewerbe besteht vorzugsweise aus drei Schichten, und zwar aus zwei um 90° Grad versetzten Glasfaserschichten und einer Wirrfaserschicht. Über die getränkte Wirrfaserschicht wird der Kontakt des Liners zum Rohr bzw. Kanalinneren hergestellt. Üblich ist eine Mindestdicke des Liners von etwa 3 mm.

Als zeitverzögernd aushärtende Chemikalie kommt insbesondere ein Kunstharz zum Einsatz, das zumindest nach der Aushärtung im Verbund mit dem Linermaterial flüssigkeitsundurchlässig ist. Der Harz weist gut Hafteigenschaften, auch auf feuchten Oberflächen und Widerstandsfähigkeit auch gegen aggressive Medien auf. Die Aushärtezeiten können durch geeignete Dosierung des Härters zwischen etwa 30 - 90 Minuten eingestellt werden.

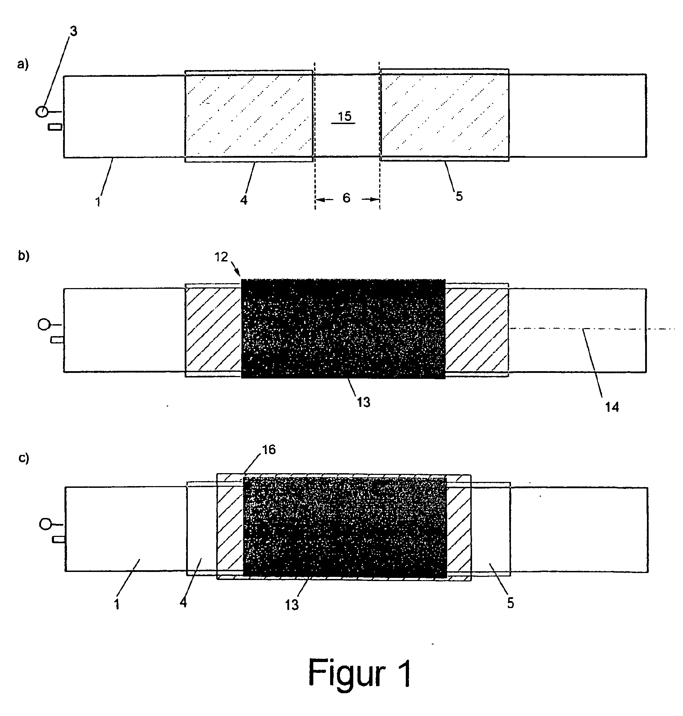

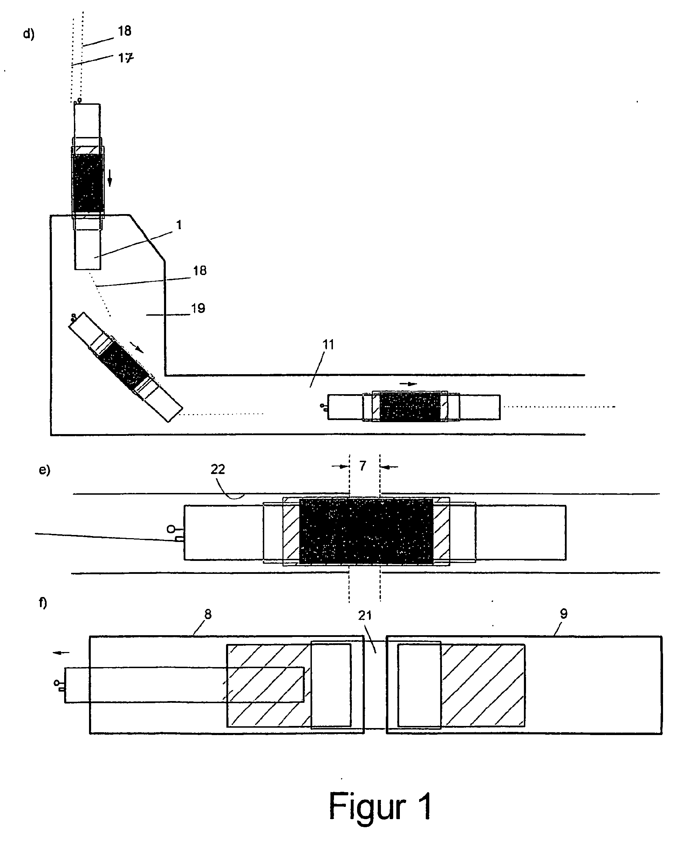

Nachfolgend werden die Verfahrensschritte gemäß der Erfindung anhand der Figur 1 näher erläutert:
Figur 1 a) bis c) zeigt die Vorbereitung des Blähpackers für die Durchführung der grabenlosen Reparatur.

Der an sich bekannte Blähpacker 1 besteht aus einem an die Nennweite des zu reparierenden Rohres angepassten elastischem Profil, das über eine Versorgungsleitung mit einer Druckluftquelle in Verbindung steht. Durch Beaufschlagen des in dem Profil eingeschlossenen Raumes mit Druckluft aus der Druckluftquelle wird der Blähpacker 1 aufgeweitet. Die Versorgungsleitung und Druckluftquelle ist der Übersichtlichkeit halber nicht dargestellt. An der Stirnseite des Blähpackers 1 befindet sich der Anschluss 2 für die Druckluftleitung sowie eine Befestigungsöse 3 für ein Zugseil zum Einziehen des Blähpackers 1 in die Rohrleitung.

Zwei zuvor mit zeitverzögert aushärtenden Kunstharz getränkte Liner 4,5 werden im Abstand 6 zueinander auf dem Blähpacker 1 aufgezogen.

Dieser Abstand 6 zwischen den beiden Linern 4,5 sollte wenigstens dem Abstand 7 an der Stoßstelle zwischen den beiden Rohren 8,9 der Rohrleitung 11 entsprechen.

Anschließend wird mit Spiel 12 eine Manschette 13 aus Gummi, Silikon oder einem anderen elastischen, flüssigkeitsdichten Material über die Liner 4,5 gezogen, die in Richtung der Längsachse 14 des Blähpackers 1 die beiden Liner 4,5 teilweise und die durch den Abstand 6 zwischen den Linern 4,5 definierte ringförmige Fläche 15 des Blähpackers 1 vollständig überlappt, wie dies insbesondere aus Figur 1 a),b) erkennbar ist.

Anschließend wird die elastische Manschette 13 mit einer Plastikfolie 16 umschlungen, so dass die Manschette 13 bündig an der Umfangsfläche des Blähpackers 1 anliegt.

Der derart vorbereitete Blähpacker 1 wird mit einem Druckluftschlauch 17 und Zugseilen 18 stirnseitig verbunden und über einen Zugangsschacht 19 in die Rohrleitung 11 hineingezogen, bis sich der die freie ringförmige Fläche 15 des Blähpackers 1 überlappende Teil der elastischen Manschette 13 auf Höhe des schadhaften Übergangs 21 zwischen den beiden Rohren 8,9 der Rohrleitung 11 befindet. Anschließend wird der Blähpacker 1, wie in Figur 1 e) dargestellt, an der Schadstelle aufgeweitet, bis die beiden Liner 4,5 an der Innenwand 22 der Rohrleitung 11 anliegen.

Nach dem Aushärten des Kunstharzes wird die Druckluft aus dem Blähpacker 1 abgelassen. Der im Durchmesser reduzierte, entspannte Blähpacker 1 wird sodann, wie in Figur 1 f) dargestellt, aus der Rohrleitung 11 mit Hilfe des Zugseils 18 herausgezogen, während die beiden Liner 4,5 und die elastische Manschette 13 in der Rohrleitung 11 verbleiben. Wie insbesondere aus Figur 1 f) ersichtlich, überbrückt die elastische Manschette 13 den schadhaften Übergang 21 und wird mit den Enden der Rohre 8,9 durch die ausgehärteten Liner 4,5 sicher und dicht verbunden.

### Bezugszeichenliste

| **Nr.** | **Bezeichnung** |
|---|---|
| 1. | Blähpacker |
| 2. | Anschluss |
| 3. | Befestigungsöse |
| 4. | Liner |
| 5. | Liner |
| 6. | Abstand |
| 7. | Abstand |
| 8. | Rohr |
| 9. | Rohr |
| 10. | -- |
| 11. | Rohrleitung |
| 12. | Spiel |
| 13. | Manschette |
| 14. | Längsachse |
| 15. | ringförmige Fläche |
| 16. | Plastikfolie |
| 17. | Druckluftschlauch |
| 18. | Zugseil |
| 19. | Zugangsschacht |
| 20. | -- |
| 21. | Übergang |
| 22. | Innenwand |

## Patentansprüche

1. Verfahren zur grabenlosen Reparatur von Schadstellen in Kanälen und Rohrleitungen mittels Linern, die mit einer zeitverzögert aushärtenden Chemikalie getränkt und in den Kanal oder die Rohrleitung eingebracht werden, **dadurch gekennzeichnet, dass**
a) zwei mit der zeitverzögert aushärtenden Chemikalie getränkte Liner (4,5) im Abstand (6) zueinander auf den Blähpacker (1) aufgezogen werden, wobei die Enden jedes Liners sich im Umfangsrichtung überlappen,
b) anschließend mit Spiel (12) über die beiden Liner (4,5) eine elastische Manschette (13) gezogen wird, die in Richtung der Längsachse (14) des Blähpackers (1) die beiden Liner (4,5) teilweise und die durch den Abstand zwischen den Linern definierte ringförmige freie Fläche (15) des Blähpackers (1) vollständig überlappt,
c) an der elastischen Manschette (13) mindestens ein Halteelement (16) angeordnet wird, so dass die Manschette (13) an den Linern (4,5) und der freien Fläche (15) des Blähpackers (1) anliegt,
d) der derart vorbereitete Blähpacker (1) in die Rohrleitung (11) oder den Kanal eingebracht wird, bis sich der die freie Fläche (15) des Blähpackers (1) überlappende Teil der elastischen Manschette (13) auf Höhe eines Übergangs (21) zwischen zwei Rohren (8,9) der Rohrleitung (11) oder zwei Kanalsegmenten des Kanals befindet,
e) anschließend der Blähpacker (1) aufgeweitet wird, bis die beiden Liner (4,5) sowie die elastische Manschette (13) an der Innenwand (22) der Rohrleitung (11) oder des Kanals anliegen,
f) nach dem Erhärten der zeitverzögernd härtenden Chemikalie der Blähpacker (1) entspannt und aus der Rohrleitung (11) oder dem Kanal entfernt wird, während die beiden Liner (4,5) sowie die elastische Manschette (13) in der Rohrleitung (11) oder dem Kanal verbleiben.

2. Verfahren zur grabenlosen Reparatur von Schadstellen nach Anspruch 1, **dadurch gekennzeichnet, dass** der vorbereitete Blähpacker (1) unter Kamerabeobachtung in die Rohrleitung (11) oder den Kanal eingebracht wird.

3. Verfahren zur grabenlosen Reparatur von Schadstellen nach Anspruch 1 oder 2, **dadurch gekennzeichnet, dass** der vorbereitete Blähpacker (1) in die Rohrleitung (11) oder den Kanal gezogen oder eingeschoben wird.

4. Verfahren zur grabenlosen Reparatur von Schadstellen nach einem der Ansprüche 1 bis 3, **dadurch gekennzeichnet, dass** der Blähpacker (1) nach der Aufweitung mittels Druckluft zwischen 30 - 90 Minuten in der Rohrleitung (11) oder dem Kanal zum Erhärten der zeitverzögernd härtenden Chemikalie verbleibt, bevor die Luft aus dem Blähpacker abgelassen und dieser aus der Rohrleitung (11) oder dem Kanal herausgezogen wird.

5. Verfahren zur grabenlosen Reparatur von Schadstellen nach einem der Ansprüche 1 bis 4, **dadurch gekennzeichnet, dass** für die beiden Liner (4,5) ein Glasfasergewebe verwendet wird.

6. Verfahren zur grabenlosen Reparatur von Schadstellen nach einem der Ansprüche 1 bis 5, **dadurch gekennzeichnet, dass** die Liner (4,5) in einer Größe gewählt werden, dass deren Enden sich in Umfangsrichtung um mindestens 10 % der Umfangslänge überlappen, wenn der Liner auf den entspannten Blähpacker (1) aufgezogen wird.

7. Verfahren zur grabenlosen Reparatur von Schadstellen nach einem der Ansprüche 1 bis 6, **dadurch gekennzeichnet, dass** jeder Liner (4,5) mit einem zeitverzögernd aushärtendem Harz getränkt wird, das zumindest nach der Aushärtung im Verbund mit dem Linermaterial flüssigkeitsundurchlässig ist.

8. Verfahren zur grabenlosen Reparatur von Schadstellen nach einem der Ansprüche 1 bis 7, **dadurch gekennzeichnet, dass** der Blähpacker (1) vor dem Aufziehen der Liner (4,5) mit einem Trennmittel vorbehandelt wird und/oder mit einer Trennfolie umhüllt wird, die sich über die Länge der beiden Liner (4,5) in Richtung der Längsachse (14) des Blähpackers (1) und über die Länge der ringförmigen freien Fläche (15) des Blähpackers (1) erstreckt.

9. Verfahren zur grabenlosen Reparatur von Schadstellen nach einem der Ansprüche 1 bis 8, **dadurch gekennzeichnet, dass** es zur Reparatur von Übergängen (21) zwischen gegeneinander beweglichen Rohren (8,9) einer Rohrleitung (11) oder gegeneinander beweglichen Übergängen von Kanalsegmenten eines Kanals verwendet wird.

10. Verfahren zur grabenlosen Reparatur von Schadstellen nach Anspruch 9, **dadurch gekennzeichnet, dass** es zur Reparatur von gegeneinander beweglichen Segmenten einer Schlitzrinne verwendet wird.

11. Blähpacker zur Durchführung des Verfahrens nach einem der Ansprüche 1 bis 11, , **dadurch gekennzeichnet, dass**
- zwei mit der zeitverzögert aushärtenden Chemikalie getränkte Liner (4,5) im Abstand (6) zueinander auf den Blähpacker (1) angeordnet sind, wobei die Enden jedes Liners sich im Umfangsrichtung überlappen und
- eine elastische Manschette (13) die beiden Liner (4,5) umgibt, wobei die Manschette in Richtung der Längsachse (14) des Blähpackers (1) die beiden Liner (4,5) teilweise und die durch den Abstand zwischen den Linern definierte ringförmige freie Fläche (15) des Blähpackers (1) vollständig überlappt,

12. Blähpacker zur Durchführung des Verfahrens nach Anspruch 11, **dadurch gekennzeichnet, dass** an der elastischen Manschette (13) mindestens ein Halteelement (16) angeordnet ist.

13. Blähpacker zur Durchführung des Verfahrens nach Anspruch 12, **dadurch gekennzeichnet, dass** das Haltelement eine die Manschette (13) umgebende Folie ist.

## Claims

1. Method for trenchless repair of defects in pipelines and channels by means of liners which are impregnated with a time-delay hardening chemical and which are inserted into the channel or pipeline, **characterised in that**
a) two liners (4, 5) impregnated with the time-delay hardening chemical are pulled onto a swelling packer (1) at a distance (6) from one another, wherein the ends of each liner overlap in the circumferential direction,
b) an elastic sleeve (13) is then pulled over the two liners (4, 5) with clearance (12), which sleeve partially overlaps the two liners (4, 5) in the direction of the longitudinal axis (14) of the swelling packer (1) and completely overlaps the annular free surface (15) of the swelling packer (1) defined by the distance between the liners,
c) at least one retaining element (16) is disposed on the elastic sleeve (13) so that the sleeve (13) abuts against the liners (4, 5) and the free surface (15) of the swelling packer (1),
d) the swelling packer (1) provided in such a manner is inserted into the pipeline (11) or the channel until the part of the elastic sleeve (13) overlapping the free surface (15) of the swelling packer (1) is located at the height of a junction (21) between two tubes (8, 9) of the pipeline (11) or two channel segments of the channel,
e) the swelling packer (1) is then widened until the two liners (4, 5) and the elastic sleeve (13) abut against the inner wall (22) of the pipeline (11) or the channel,
f) after hardening of the time-delay hardening chemical, the swelling packer (1) is relaxed and removed from the pipeline (11) or the channel, whilst the two liners (4, 5) as well as the elastic sleeve (13) remain in the pipeline (11) or the channel.

2. The method for trenchless repair of defects according to claim 1, **characterised in that** the prepared swelling packer (1) is inserted in the pipeline (11) or the channel under camera observation.

3. The method for trenchless repair of defects according to claim 1 or 2, **characterised in that** the prepared swelling packer (1) is pulled or pushed into the pipeline (11) or the channel.

4. The method for trenchless repair of defects according to any one of claims 1 to 3, **characterised in that** after widening by means of compressed air, the swelling packer (1) remains in the pipeline (11) or the channel for between 30-90 minutes for hardening the time-delay hardening chemical before the air is released from the swelling packer and this is removed from the pipeline (11) or the channel.

5. The method for trenchless repair of defects according to any one of claims 1 to 4, **characterised in that** a glass fibre fabric is used for the two liners (4, 5).

6. The method for trenchless repair of defects according to any one of claims 1 to 5, **characterised in that** the liners (4, 5) are selected in a size such that their ends overlap in the circumferential direction by at least 10% of the circumferential length when the liner is pulled onto the relaxed swelling packer (1).

7. The method for trenchless repair of defects according to any one of claims 1 to 6, **characterised in that** each liner (4, 5) is impregnated with a time delay hardening resin which is at least impermeable to liquid after the hardening in combination with the liner material.

8. The method for trenchless repair of defects according to any one of claims 1 to 7, **characterised in that** before pulling on the liner (4, 5) the swelling packer (1) is pre-treated with separating agents and/or encased with a separating film which extends over the length of the two liners (4, 5) in the direction of the longitudinal axis (14) of the swelling packer (1) and over the length of the annular free surface (15) of the swelling packer (1).

9. The method for trenchless repair of defects according to any one of claims 1 to 8, **characterised in that** it is used to repair junctions (21) between pipes (8, 9) of a pipeline (11) which are movable with respect to one another or junctions of channel segments of a channel which are movable with respect to one another.

10. The method for trenchless repair of defects according to claim 9, **characterised in that** it is used for repairing segments of a slotted drainage channel which are movable with respect to one another.

11. A swelling packer for carrying out the method according to any one of claims 1 to 11, **characterised in that**
- two liners (4, 5) impregnated with the time-delay hardening chemical are arranged at a distance (6) from one another on the swelling packer (1), wherein the ends of each liner overlap in the circumferential direction and
- an elastic sleeve (13) surrounds the two liners (4, 5), wherein the sleeve partially overlaps the two liners (4, 5) in the direction of the longitudinal axis (14) of the swelling packer (1) and completely overlaps the annular free surface (15) of the swelling packer (1) defined by the distance between the liners.

12. The swelling packer for carrying out the method according to claim 11, **characterised in that** at least one retaining element (16) is disposed on the elastic sleeve (13).

13. The swelling packer for carrying out the method according to claim 12, **characterised in that** the retaining element is a film surrounding the sleeve (13).

## Revendications

1. Procédé pour réparer sans fosse des endroits défectueux dans des conduits et conduites au moyen de liners, qui sont imbibés avec un produit chimique durcissant avec retard et sont introduits dans le conduit ou la conduite, **caractérisé en ce que**
a) deux liners (4, 5) imbibés avec le produit chimique durcissant avec retard sont enfilés à distance (6) l'un de l'autre sur la garniture d'étanchéité à expansion (1), les extrémités de chaque liner se chevauchant dans le sens périphérique,
b) une manchette (13) élastique est tirée ensuite avec du jeu (12) au-dessus des deux liners (4, 5), laquelle garniture recouvre partiellement les deux liners (4, 5) en direction de l'axe longitudinal (14) de la garniture d'étanchéité à expansion (1) et recouvre complètement la surface libre (15), de forme annulaire, définie par l'espacement entre les liners, de la garniture d'étanchéité à expansion (1),
c) au moins un élément de retenue (16) est disposé sur la manchette (13) élastique, de sorte que la manchette (13) s'applique sur les liners (4, 5) et la surface (15) libre de la garniture d'étanchéité à expansion (1),
d) la garniture d'étanchéité à expansion (1) préparée de cette façon est introduite dans la conduite (11) ou le conduit jusqu'à ce que la partie, recouvrant la surface (15) libre de la garniture d'étanchéité à expansion (1), de la manchette (13) élastique se trouve à la hauteur d'une transition (21) entre deux tuyaux (8, 9) de la conduite (11) ou deux segments du conduit,
e) la garniture d'étanchéité à expansion (1) est élargie ensuite jusqu'à ce que les deux liners (4, 5) et la manchette (13) élastique s'appliquent sur la paroi intérieure (22) de la conduite (11) ou du conduit,
f) la garniture d'étanchéité (1) est détendue après le durcissement du produit chimique durcissant avec retard et est enlevée de la conduite (11) ou du conduit, alors que les deux liners (4, 5) et la manchette (13) élastique restent dans la conduite (11) ou le conduit.

2. Procédé pour réparer sans fosse des endroits défectueux selon la revendication 1, **caractérisé en ce que** la garniture d'étanchéité à expansion (1) préparée est introduite sous l'observation d'une caméra dans la conduite (11) ou le conduit.

3. Procédé pour réparer sans fosse des endroits défectueux selon la revendication 1 ou 2, **caractérisé en ce que** la garniture d'étanchéité à expansion (1) préparée est tirée ou introduite dans la conduite (11) ou le conduit.

4. Procédé pour réparer sans fosse des endroits défectueux selon l'une quelconque des revendications 1 à 3, **caractérisé en ce que** la garniture d'étanchéité à expansion (1) reste après l'élargissement au moyen d'air comprimé entre 30 et 90 minutes dans la conduite (11) ou le conduit pour le durcissement du produit chimique durcissant avec retard, avant que l'air soit évacué de la garniture d'étanchéité à expansion et que celle-ci soit retirée de la conduite (11) ou du conduit.

5. Procédé pour réparer sans fosse des endroits défectueux selon l'une quelconque des revendications 1 à 4, **caractérisé en ce qu'**un tissu en fibre de verre est utilisé pour les deux liners (4, 5).

6. Procédé pour réparer sans fosse des endroits défectueux selon l'une quelconque des revendications 1 à 5, **caractérisé en ce que** les liners (4,5) sont choisis dans une taille de telle sorte que leurs extrémités se chevauchent dans le sens périphérique d'au moins 10 % de la longueur périphérique lorsque le liner est enfilé sur la garniture d'étanchéité à expansion (1) détendue.

7. Procédé pour réparer sans fosse des endroits défectueux selon l'une quelconque des revendications 1 à 6, **caractérisé en ce que** chaque liner (4, 5) est imbibé avec une résine durcissant avec retard, laquelle est imperméable au liquide au moins après le durcissement en liaison avec le matériau du liner.

8. Procédé pour réparer sans fosse des endroits défectueux selon l'une quelconque des revendications 1 à 7, **caractérisé en ce que** la garniture d'étanchéité à expansion (1) est prétraitée avec un agent de séparation avant l'enfilement des liners (4, 5) et/ou est enveloppée avec un film de séparation, qui s'étend sur une longueur des deux liners (4, 5) en direction de l'axe longitudinal (14) de la garniture d'étanchéité à expansion (1) et sur la longueur de la surface (15) libre de forme annulaire de la garniture d'étanchéité à expansion (1).

9. Procédé pour réparer sans fosse des endroits défectueux selon l'une quelconque des revendications 1 à 8, **caractérisé en ce qu'**il est utilisé pour réparer des transitions (21) entre des tuyaux (8, 9) mobiles l'un par rapport à l'autre d'une conduite (11) ou entre des transitions mobiles l'une par rapport à l'autre de segments d'un conduit.

10. Procédé pour réparer sans fosse des endroits défectueux selon la revendication 9, **caractérisé en ce qu'**il est utilisé pour réparer des segments mobiles l'un par rapport à l'autre d'une goulotte à fente.

11. Procédé pour réparer sans fosse des endroits défectueux selon l'une quelconque des revendications 1 à 11, **caractérisé en ce que**
- deux liners (4, 5) imbibés avec un produit chimique durcissant avec retard sont disposés à distance (6) l'un de l'autre sur la garniture d'étanchéité à expansion (1), les extrémités de chaque liner se chevauchant dans le sens périphérique et
- une manchette (13) élastique entoure les deux liners (4, 5), la manchette chevauchant partiellement les deux liners (4, 5) en direction de l'axe longitudinal (14) de la garniture d'étanchéité à expansion (1) et chevauchant complètement la surface libre (15), de forme annulaire, définie par l'espacement entre les liners, de la garniture d'étanchéité à expansion (1).

12. Garniture d'étanchéité à expansion pour mettre en oeuvre le procédé selon la revendication 11, **caractérisée en ce qu'**au moins un élément de retenue (16) est disposé sur la manchette (13) élastique.

13. Garniture d'étanchéité à expansion pour mettre en oeuvre le procédé selon la revendication 12, **caractérisée en ce que** l'élément de retenue est un film entourant la manchette (13).
